# EUROPEAN PATENT SPECIFICATION

(11) **EP 2 811 843 B1**
(45) Date of publication and mention of the grant of the patent: **27.04.2016**
(21) Application number: 12816088.4
(22) Date of filing: 19.11.2012
(51) Int. Cl.: A23K 20/163, A23K 40/00, A23K 10/33

(54) **PROCESS FOR PREPARING ANIMAL FEED**
VERFAHREN ZUR HERSTELLUNG VON TIERFUTTER
PROCÉDÉ DE PRÉPARATION D'ALIMENT POUR ANIMAUX

(30) Priority: 08.02.2012 GB 201202198
(43) Date of publication of application: 17.12.2014
(73) Proprietor: Rumenco Limited, Burton-on-Trent, Staffordshire DE13 0DW (GB)
(72) Inventor: HEAP, Frank Cedric, Burton-on-Trent Staffordshire DE13 0DW (GB)
(74) Representative: Drury, Carole
(86) International application number: PCT/GB2012/052861
(87) International publication number: WO 2013/117878

(56) References cited:
- DE-A1- 2 156 131
- US-A- 3 718 484
- US-A- 3 880 688
- US-A- 4 919 956

## Description

The present invention relates to the manufacture of animal feed supplements and, in particular, to a method and apparatus for processing carbohydrate-based foodstuffs, such as molasses, into Low Moisture animal feed Blocks (LMBs).

Molasses is widely used as a basis for animal feed supplements. The manufacture of molasses based animal feed supplements involves heating raw molasses to reduce the water content and to solidify it. Molasses is heated to high temperatures which results in dehydration and chemical reaction of the sugars so that the dehydrated and processed molasses solidifies when cooled into a vitreous solid. Prior to being fully cooled, the viscous molasses is mixed with other ingredients to form a nutritious 'lick' feed for ruminants, horses, goats and camelids. When an animal licks the block, its saliva dissolves the carrier to enable some of the nutrients and additives to be consumed. The animal eventually tires of licking, thereby regulating the amount of additive ingested. Furthermore, because liquid (e.g. saliva or rainwater) can only penetrate a short distance into the surface of the glasslike block, dissolution of the block is rate limited and hence predictable over time.

For these reasons, LMBs are extremely convenient to use and are becoming increasingly popular amongst farmers for administering regulated quantities of nutrients and additives, to livestock over a period of time.

A known method of processing molasses to produce an animal feed supplement as described above is to blend the molasses with a vegetable oil and to heat the mixture in a vat. Heating takes place causing water to be removed by evaporation whilst simultaneously inducing chemical changes in sugar chemistry (e.g. sugar cracking) to cause the mixture to become hard and glass-like upon cooling. Molasses would typically be dehydrated from 20-25% to 3-8% moisture.

The practice in the known prior art is to heat a supply feed of molasses or comparable substrates in a vessel in order to trigger complex chemical changes of the sugars which undergo Maillard reactions leading to, amongst others, partial caramelisation producing Amadori rearrangements and Strecker syntheses, colour bodies and hydroxymethylfurfuraldehyde (Mitsuo Namiki 1988 Advances in Food Research 32 Academic Press, New York).

Upon cooling the heated liquid, the molasses solidifies into a glassy, vitreous product having a characteristic dark brown colour. The degree of hardness of the vitreous product is influenced by the heating temperature and conditions. Changes in sugar chemistry occur when heat, with or without vacuum, is applied for a variable period of time. For example, these changes can be induced by heating for 30-150 minutes at 125°C followed by 10-30 minutes at 50-70°C under strong vacuum according to EP 1 927 291 A1. A second patent, US 4846053, heated the molasses to 140°C without vacuum. If the changes in sugar chemistry are not induced then the final product remains softer and is sometimes referred to as "soft-crack". Soft-crack products have undesirable, namely faster, release characteristics, and are therefore unsuitable for use as LMBs.

US2089062 (Houghland, 1937) describes an attempt to dehydrate molasses under reduced pressure conditions with a simple thin layer heating device. An objective was to avoid caramelisation of the sugars, which he regarded as objectionable, by using a vacuum of 26-28 inches of mercury, which allegedly also controlled foaming and frothing which is frequently encountered when molasses or molasses mixtures are heated. The dehydrated molasses collected in the bottom of the apparatus, manufacture was stopped, the machine was entered by means of a manhole and the still viscous and hot partially dehydrated product taken out manually.

US3961081 (McKenzie, 1976) criticises the Houghland method because a vacuum was applied to the molasses prior to and during the heating and therefore before the removal of any water from the molasses. Further, the application of vacuum for drying before the removal by heating of any water from the molasses precluded the formation of dense, hard, vitreous feed blocks and also precluded the inclusion of other feed materials with the molasses when it was being treated, and hence precluded the integral inclusion of other feed materials within a matrix of hard molasses. McKenzie concluded that production rate was severely limited because of the tendency of the molasses to swell and foam when subjected to vacuum, making animal feed production by such methods generally costly and inefficient. McKenzie devised a method of heating a mass of molasses in excess of the boiling point of water to drive off a major proportion of water and then subjecting the molasses to vacuum at the same temperature, or lower, so as to remove further moisture without foaming and frothing. Current methods of processing molasses to produce a hard vitreous feedblock such as the EP1726214 B1 (Carrs Agriculture Limited) are founded on variations of the McKenzie method. For example the Carrs patent heats a mass of molasses under vacuum for a period of 30 to 150 minutes at temperature of 90 to 125°C under vacuum followed by 10 to 30 minutes at a temperature of 50 to 75°C and claim to reduce foaming and frothing. Significantly, an elaborate pressure relief system is incorporated in their process because it was recognised that molasses could and would boil, froth and foam in an uncontrollable way and therefore an escape system was essential to avoid disasters of the kind that is detailed for example by Wong Sak Hoi & Chasteau de Balyon (1996 Proc S Afr Sug Technol Ass). Other methods of providing similar carbohydrate based products are disclosed in documents DE 2156131, US 3,718,484 and US 4,737,377.

The present invention provides a process which alleviates one or more of the above-mentioned problems.

According to a first aspect of the present invention there is provided a method for the manufacture of an animal feed supplement, which is a vitreous solid comprising: processing a carbohydrate-containing liquid composition to induce cracking and evaporation and thereby form a concentrated liquid composition; and solidifying the concentrated liquid composition to form the animal feed supplement;
wherein the carbohydrate-containing liquid composition is processed by continuously feeding the carbohydrate-containing liquid composition into a first (input) end of a thin film processor subjecting the carbohydrate-containing liquid composition to cracking and evaporation within the thin film processor and continuously removing the concentrated liquid composition from the second (output) end of the thin film processor, wherein the concentrated liquid composition has a moisture content of from 2 to 8%.

As far as the inventors are aware, a thin film processor has never been employed continuously to produce an animal feed block supplement.

It will be understood that the carbohydrate-containing liquid composition comprises water so that evaporation can also be described as dehydration. Advantages of the invention over prior art processes that dehydrate and cook large batches of molasses include:
A reduction in the time required to manufacture animal feed supplements LMBs. This leads to saving in terms of energy and makes the process more economical.
A reduction in the time required for start up and close down of the manufacturing process. Heating and cooling large volumes of molasses can take several hours.

No large volumes of molasses are boiled or cooked making the process safer by removing the risk of frothing/foaming and other signs of uncontrollable exothermic reactions. Similarly, there is no necessity to have elaborate pressure relief systems to control exothermic explosion of heated bulk molasses.

The installation of substantial vacuum equipment during the heating process or the cooling process may be beneficial during heating and cooling but it is not essential for the process.

Reduction in the loss of carbohydrate during heating. Losses of 2-8% of sugars in the molasses mixture have been reported, see Carrs patent EP 1 726 214 B1. Carrs claim a reduction in sugar loss using their process compared with previous patents but do not specify the loss. In the present invention the levels of sugar were determined by the Lane Eynon Constant Volume Method (ICUMSA Method GS 4/3-7, 2011) before and after processing and the loss was less than 1% when the molasses mixture was heated to 135°C in the processor.

A thin film processor (TFP) (or processor in the present application) heats a thin film of a substance by contact with a heated surface. This film is constantly renewed as progressively more concentrated material is displaced from the input end to the output end of the TFP.

It will be understood that the animal feed supplement is a vitreous solid as a result of the cracking which takes place in the TFP. A vitreous solid is an amorphous, glass-like solid. TFPs and similar apparatus have previously been employed to dry molasses only rather than to further process and induce cracking such that a vitreous product results.

US3880688 describes an apparatus for the continuous large scale production of spraydried molasses. The molasses is heated in a controlled manner to a temperature sufficient to partially dehydrate the mixture without caramelizing or otherwise degrading it. US4919956 describes a method for drying honey and molasses where caramelization is avoided. US2801174 describes a process for dehydrating molasses to produce a friable product.

US2089062 describes a method for concentrating molasses which consists of spreading the liquid in a thin film on a heated moving surface and applying a vacuum (26-28 inches of mercury). When a desired quantity of the product has been concentrated, the heat is shut off, the machine is stopped and the vacuum is broken. Finally a manhole is opened and the product is removed whilst still hot and still in a fluid condition. This is a batch process. The US2089062 method concentrates molasses but does not cook it; it avoids caramelisation which is described as objectionable.

In one embodiment the TFP is a thin film rotary processor. In such an embodiment the TFP comprises a drum and a thin film is formed on the inside surface of the drum by means of a rotor creating a centrifugal force.

In one embodiment the TFP is a thin film plate processor

In some embodiments the TFP is vertical or horizontal.

The concentrated liquid composition has a moisture content that allows it to solidify on cooling (optionally after mixing with additives). In one series of embodiments the concentrated liquid composition has a moisture content of less than 8%, 7%, 6%, 5%, 4% or 3%. In one series of embodiments the concentrated liquid composition has a moisture content of at least 3%, 4%, 5%, 6% or 7%. In a particular embodiment, the concentrated liquid composition has a moisture content of from 3 to 5%.

Typically, the TFP will be heated by means of a heating jacket. A heating jacket surrounds the TFP and is filled with hot fluid, usually water/steam or oil.

Cracking is the well known term for chemical reactions (including caramelisation reactions) that take place in carbohydrate-containing liquids such as molasses. Cracking allows the supplement to solidify into a vitreous solid. In the prior art processes molasses is cooked for long periods to induce cracking. In one embodiment the carbohydrate-containing liquid composition is heated to a "hard crack temperature" within the TFP. Hard crack refers to a point where specific chemical reactions of the carbohydrate, notably Maillard reactions, take place. These reactions can be recognised by a change in the colour of the liquid composition to dark brown/black. In a particular embodiment the carbohydrate-containing liquid composition undergoes Maillard reactions leading to, amongst others, partial caramelisation producing Amadori rearrangements and Strecker syntheses, colour bodies and hydroxymethylfurfuraldehyde (Mitsuo Namiki 1988).

The inventors have found that the hard crack temperature for a molasses mixture in the TFP is approximately 133 to 154°C. The inventors have discovered that this temperature can be reduced by the addition of vegetable oil or the use of a homogeniser.

In one series of embodiments the liquid composition is heated to a temperature of at least 110°C, 115°C, 120°C, 125°C, 130°C, 133°C, 135°C, 137°, 140°C, 145°C, 147°C, 150°C, 152°C or 155°C within the TFP. In one series of embodiments the liquid composition is heated to a temperature of less than 160°C, 158°C, 156°C, 154°C, 152°C, 150°C, 148°C, 145°C, 140°C, 138°C, 136°, 135°C, 134°C, 130°C, 125°C or 120°C within the TFP.

In one embodiment where the liquid composition comprises oil, the liquid composition is heated to a temperature of 133 to 137°C, 134 to 136°C or approximately 135°C within the TFP.

In a particular embodiment the liquid composition is heated to a temperature of from 140 to 154°C within the TFP.

US2089062 explains that the drum is heated by burners and maintained at such a temperature to produce a desired rate of evaporation. The temperature is not disclosed but it is clear that cracking does not take place since caramelisation was considered objectionable and to be avoided.

In the context of the present invention the dwell time is defined as the time a given portion of liquid composition spends within the TFP i.e. the time taken for a given portion of the liquid composition to travel from the input end to the output end of the TFP. In one series of embodiments the dwell time is at least 1, 2, 3, 4, 5, 6, 7, 8, 9 or 10 minutes. In one series of embodiments the dwell time is less than 20, 15, 10, 9, 8, 7, 6, 5, 4, 3, 2 or 1 minutes. In a particular embodiment the dwell time is from 2 to 5 minutes. The present invention allows a feed supplement to be prepared much more quickly than previously. For example, EP1726214 discloses a system where molasses is cooked for 30 to 150 minutes, followed by a further 30 minutes at a lower temperature.

In one embodiment the TFP is employed at a rate of at least 1, 3, 5, 7 or 10 tonnes per hour (1 tonne = 1000kg).

It is economical to minimise the time the liquid composition spends in the TFP in order to increase the throughput of the TFP. Therefore, in one embodiment, the temperature of the liquid composition when it enters the first end of the TFP is above room temperature e.g. above 25°C. This is known as the input temperature. In one embodiment the liquid composition is fed into the first end of the TFP at a temperature of from 40 to 80°C. It is important to avoid the possibility of an uncontrolled exothermic reaction due to overheating. For prudence, a liquid composition which comprises mainly (e.g. at least 80 or 85% molasses) or wholly molasses is fed into the first end at a maximum temperature of 70°C, i.e. the maximum input temperature is 70°C. This however can vary when different liquid compositions with less molasses are fed into the TFP and the risk of uncontrolled exothermic reactions is reduced e.g. when 'extenders' such as whey permeates or condensed molasses solubles (CMS) are included. In a particular embodiment the input temperature is from 50 to 60°C.

In one embodiment a heat exchanger is employed to raise the temperature of the liquid composition before it is fed into the TFP. In this way, only a small volume of the liquid composition is heated at any one time. There are disadvantages to heating large volume of molasses such as the risk of uncontrolled exothermic reaction. For convenience, the bulk liquid composition can be stored in storage tanks which are kept at ambient temperature or above ambient temperature eg 30-80°C depending on the liquid stored eg molasses or a fat with a high melting point. A portion of the liquid composition can then be continuously transferred to the heat exchanger and subsequently into a small feeder tank and then into the TFP.

In one embodiment the liquid composition is homogenised before transfer to the TFP. It has been found that the action of homogenisation improves the efficiency with which the liquid composition is processed through the TFP. Homogenisation breaks down and intensively blends the ingredients in the liquid composition. In a particular embodiment, the liquid composition is homogenised to form a uniform suspension or emulsion. The inventors believe that homogenisation uniformly blends the mixture and increases the surface area of the discrete components of the mixture and thereby increases reaction rate on contact with the hot internal wall of the TFP. The inventors have found that homogenisation can reduce the temperature at which cracking takes place by 3 to 7°C. This leads to savings in energy costs and improves the efficiency of the process. Hence, in one embodiment where the liquid composition is homogenised before transfer to the TFP, the liquid composition is heated to a temperature of from 130 to 140°C within the TFP. This temperature can be estimated by measuring the temperature of the internal wall of the TFP.

In one embodiment the pressure in the TFP is substantially atmospheric pressure. A small amount of suction may be required to draw off the vapours into a condenser but the use of an excessive vacuum to reduce the boiling point of the liquid composition can cause some of the liquid composition to be sucked into the condenser which is undesirable. Care is required in the use of a vacuum. In contrast, US 2089062 explains that a high vacuum of 26 to 28 inches of mercury (88-95kPa when both measured at 0°C) is desirable to avoid caramelisation of the sugar. There are risks involved in using a high vacuum since it can result in uncontrolled foaming and frothing which has been previously noted by for example McKenzie (1976)

In one embodiment the concentrated liquid composition is transferred to a cooler on removal from the TFP. In one such embodiment the cooler reduces the temperature of the concentrated liquid composition to 50 to 90°C, 50-80°C or 60-70°C.

In one embodiment the cooler comprises a jacket through which cold fluid (e.g. cold water or oil) is circulated. Alternatively or additionally, a stream of cold air can be passed through the cooler to reduce the temperature of the concentrated liquid.

In one embodiment the concentrated liquid composition is transferred to a mixer after removal from the TFP. In a particular embodiment the concentrated liquid composition is transferred to a cooler, optionally stored in a temporary storage tank, and then subsequently transferred to a mixer after removal from the TFP.

In a particular embodiment a suitable screw or paddle blade mixer is employed to mix dry ingredients with the concentrated liquid composition in the mixer.

The temperature of the concentrated liquid composition will affect its viscosity. Thus, in one embodiment, the concentrated liquid composition has a temperature of from 60 to 90°C when it is in the mixer. In particular embodiments the concentrated liquid composition has a temperature from 65 to 90°C, from 60 to 70°C or 65 to 80°C when it is in the mixer. In this way, the concentrated liquid composition is cool enough to allow heat sensitive additives to be blended but warm enough and not so viscous that is prevents easy mixing.

In a typical method, the concentrated liquid composition will be solidified to form a solid low moisture block (LMB), also known as a "lick".

In one embodiment at least one additive is mixed with the concentrated liquid composition after it has been removed from the TFP and before it is solidified to form the animal feed supplement. In a particular embodiment the additive is a heat sensitive additive. In a further embodiment the additive is selected from a non-exhaustive group comprising vitamins, minerals, proteins, antioxidants, pharmaceuticals, flavourings, colouring, preservatives, carbohydrates, fats (including the oils described previously) and any combination thereof. In a yet further embodiment the additive is a vitamin, a mineral, a pharmaceutical or any combination thereof.

In a particular embodiment the concentrated liquid composition has a temperature of from 50 to 90°C, from 50 to 80°C, or from 60 to 70°C when the at least one additive is mixed with it. The choice of temperature will depend on the heat sensitivity of the additive.

A low moisture block (LMB) can be obtained by allowing the concentrated liquid composition to solidify in a container. In one series of embodiments the concentrated liquid composition is solidified to form a LMB having a mass of at least 0.1, 0.2, 0.3, 0.4, 0.5, 1, 2, 3, 4, 5, 10, 20, 30, 40, 50, 75 or 100kg. In one series of embodiments the concentrated liquid composition is solidified into a LMB having a mass of less than 500, 400, 300, 200, 150, 100 or 50kg. A typical LMB suitable for use with farm animals has a mass of 5 to 150kg. A typical LMB suitable for use as an equine product has a mass of 0.1 to 25kg

Typically, the concentrated liquid composition will be solidified to form the (vitreous) animal feed supplement by storage at ambient temperature. The lower the ambient temperature, the shorter the period required for solidification. In a particular embodiment the concentrated liquid composition is solidified to form the animal feed supplement by storage at a temperature of from 15 to 25°C or approximately 20°C for a period of from 24 to 48 hours. Such conditions reliably produce a vitreous animal feed supplement suitable for use as a LMB. Alternatively, the concentrated liquid composition is solidified to form the vitreous animal feed supplement by storage at a temperature from -10 to 10°C for a period from 8 to 24 hours.

In one embodiment the carbohydrate-containing liquid composition comprises one or more carbohydrate-containing materials from the group comprising molasses (including sugar cane molasses, beet molasses and desugarised beet molasses), condensed molasses solubles (CMS), pot ale syrup and whey products. In a particular embodiment the carbohydrate is cane molasses and/or beet molasses.

It will be understood that the carbohydrate-containing liquid composition is viscous and it becomes increasingly viscous as it is processed to form the concentrated liquid composition.

In some embodiments of the invention the carbohydrate-containing liquid composition comprises:
Cane and/or beet molasses and condensed molasses solubles (CMS) at variable ratios, a particular ratio being 60% cane and/or beet molasses and 40% CMS (+/- 5%).
Cane and/or beet molasses and pot ale syrup at variable ratios, particular ratios being 70% cane and/or beet molasses and 30% pot ale syrup (+/-5%), or 50% cane and/or beet molasses and 50% pot ale syrup (+/-5%).
Cane and/or beet molasses and whey products at variable ratios, a particular ratio being 70% cane and/or beet molasses and 30% whey products (+/- 5%).

In one series of embodiments the liquid composition comprises at least 30, 35, 40, 45, 50, 55, 60, 65, 70, 75, 80, 85, 90, 95 or 99% molasses. In one series of embodiments the liquid composition comprises less than 100, 95, 90, 85, 80, 75, 70, 60, 65, 60, 55, 50, 45, 40 or 35% molasses. In a particular embodiment the liquid composition comprises from 50 to 90% molasses.

In one embodiment the composition comprises beet molasses and cane molasses. In particular embodiments the ratio of beet molasses to cane molasses is from 90:10 to 10:90, from 80:20 to 20:80, from 70:30 to 30:70, from 60:40 to 40:60, from 55:45 to 45:55 or 50:50. The inventors have found that greater the proportion of beet molasses, the higher the temperature required in the TFP and the more quickly the liquid composition can be dehydrated whilst still allowing sufficient cracking to take place. The inventors have also found that the proportions have an effect on the hardness of the resulting animal feed supplement. The addition of beet molasses to cane molasses results in a LMB that is less affected by temperature. This is useful in winter conditions when the LMB is prone to freezing, thereby restricting intake and in summer when high ambient temperatures can result in softening the blocks, especially those which incorporate additional fats or oils.

In one embodiment the carbohydrate-containing liquid composition additionally comprises fat. In a particular series of embodiments the liquid composition comprises from 0.5 to 25%, from 1 to 20%, from 1.5 to 15%, from 2 to 10%, from 3 to 8% or from 4 to 6% fat. Suitable fats include oils such as soya oil, corn oil, palm oil and palm fatty acid distillate (PFAD). In one embodiment the liquid composition comprises from 1 to 10% soy oil. In one embodiment the liquid composition comprises from 1 to 20% palm oil. In a further embodiment the liquid composition comprises 85 to 90% sugar cane molasses and 10 to 15% palm oil. Oil may be employed to increase the energy content of the resulting feed supplement, e.g. to produce a high energy LMB. In addition, the use of oil has been found to increase the optimum input temperature. In one embodiment where the liquid composition comprises oil, the input temperature is from 60 to 80°C, or from 60 to 70°C. In some embodiments where the liquid composition does not comprise oil and/or consists of cane and beet molasses, the input temperature is from 40 to 70°C or from 40 to 50°C. If the fat is solid at room temperature, it is convenient to melt it before mixing with the other ingredients in the liquid composition.

Molasses may contain naturally occurring gums and therefore the use of glycerol, urea, and surfactant has been found to facilitate the passage of the liquid composition through the TFP. The use of glycerol, urea, and/or surfactant is especially beneficial when the liquid composition comprises at least 95% molasses.

In a particular series of embodiments the liquid composition comprises from 0 to 5%, from 0.2 to 3%, from 0.3 to 2%, from 0.5 to 1.5% or from 0.7 to 1.2% glycerol. Glycerol has humectant properties and the use of glycerol produces a block which is marginally softer. This is useful in winter conditions when the LMB is prone to freezing, which restricts intake.

In particular embodiments the liquid composition comprises from 0 to 2%, from 0.1 to 1.5% or from 0.5 to 1% urea.

In particular embodiments the composition comprises from 0 to 0.5%, from 0.01 to 0.3 or 0.05 to 0.2% surfactant which reduces surface tension and hence viscosity of the molasses mixtures and facilitate processing.

CMS, pot ale syrup and whey permeate are useful "extenders". For example, they can be employed together with more expensive ingredients such as molasses.

In particular embodiments the liquid composition comprises from 0 to 40%, from 1 to 25%, from 3 to 20%, from 4 to 15% or from 5 to 10% CMS. CMS, which is higher in protein than cane molasses, is useful as an economical "extender" and could be used as the principal component of the liquid composition, but it is lower in dry matter and has a lower sugar content of the dry matter and the rate at which dehydrated and processed product is produced is reduced.

In particular embodiments the liquid composition comprises from 0 to 40%, from 1 to 15%, from 3 to 10%, from 5 to 8% or from 4 to 6% whey permeate.

In particular embodiments the liquid composition comprises from 0 to 30%, from 1 to 15%, from 3 to 10%, from 5 to 8% or from 4 to 6% pot ale syrup.

Additives can be added to the carbohydrate-containing liquid before it is treated in the TFP and/or to the concentrated liquid composition on removal from the TFP. Irrespective of the timing of addition, in one series of embodiments the resulting animal feed supplement comprises one or more of the ingredients listed in the table below.

| **Ingredient** | **Inclusion range (%)** |
|---|---|
| Sugar cane molasses | 0 - 100 |
| Beet molasses | 0 - 100 |
| Condensed molasses solubles | 0 - 40 |
| Glycerol | 0 - 1.5 |
| Soya bean oil | 0 - 10 |
| Palm oil | 0 - 25 |
| Palm fatty acid distillate | 0 - 20 |
| Whey permeate | 0 - 40 |
| Pot Ale Syrup | 0 - 40 |
| Urea | 0 - 2 |
| Surfactant | 0 - 1.0 |

The process can therefore accommodate a wide variety of raw materials and additives and the above list is not exclusive.

According to a related aspect of the invention (not claimed herein) there is provided an animal feed supplement producible by the method of the first aspect.

In one embodiment the supplement is a vitreous (glassy) block of carbohydrate comprising additives therein.

In one embodiment the supplement comprises one or more of glycerol, urea and surfactant and any combination thereof.

In one embodiment the supplement comprises from 3 to 20% fat.

According to a related aspect of the invention (not claimed herein) there is provided a system of apparatus for the manufacture of an animal feed supplement comprising;
a thin film processor for processing a carbohydrate-containing liquid composition to form a concentrated liquid composition, the thin film processor having an input for receiving the carbohydrate-containing liquid composition and an output for removing the concentrated liquid composition; and one or more of the following:
(a) a heat exchanger to raise the temperature of the carbohydrate-containing liquid composition prior to transfer to the thin film processor, the heat exchanger having an input and an output and the output of the heat exchanger feeding the input of the thin film processor;
(b) a homogeniser to homogenise the carbohydrate-containing liquid composition to form a uniform suspension or emulsion prior to transfer to the thin film processor, the homogeniser having an input and an output and the output of the homogeniser feeding the input of the thin film processor;
(c) a cooler to reduce the temperature of the concentrated liquid composition to 90°C or less on removal from the thin film processor, the cooler having an input and an output and the output of the thin film processor feeding the input of the cooler.

In one embodiment the cooler reduces the temperature of the concentrated liquid composition to 80, 75, 70 or 65°C on removal from the thin film processer.

In one embodiment the system comprises the thin film processor (TFP), the heat exchanger and the homogeniser. In a particular embodiment the homogeniser is located between the heat exchanger and the thin film processor.

In one embodiment the system comprises the TFP, the heat exchanger and the cooler.

In one embodiment the system comprises the TFP, the homogeniser and the cooler.

In a further embodiment the system comprises the TFP, the heat exchanger, the homogeniser and the cooler

In one embodiment the system additionally comprises a mixer to blend the concentrated liquid composition with one or more additives, the mixer having an input and an output and the output of the TFP feeding the input of the mixer.

It will be understood that a feeder tank may be located between the homogeniser and the TFP and/or between the heat exchanger and the TFP in order to store the heated/homogenised liquid composition for a short time before transfer to the TFP.

Embodiments of the invention will now be described with reference to the accompanying figures.

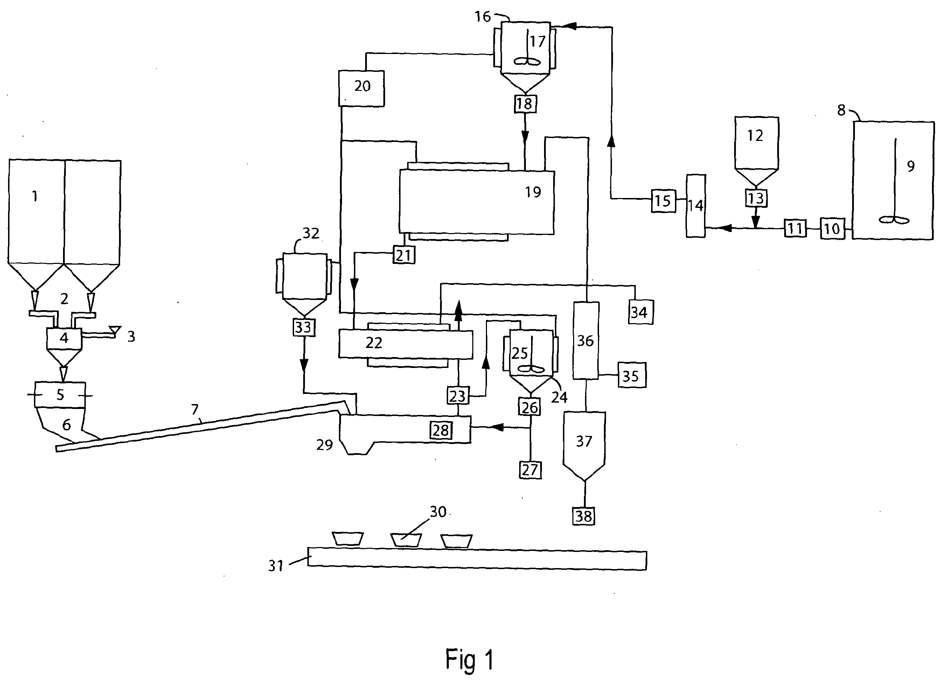

Figure 1 is a schematic diagram showing a method in accordance with an embodiment of the invention

Figure 2 is a diagram of a thin film processor (TFP) suitable for use in the method of the invention

The reference numerals shown in the figures are as follows:

| **Item Ref.** | **Description** | **Item Ref.** | **Description** |
|---|---|---|---|
| 1 | Storage Silos | 19D | Drive Motor |
| 2 | Screw Conveyors | 19E | Inlet |
| 3 | Pre-Mix Hand Additions | 19F | Outlet |
| 4 | Weigh Hopper | 20 | Steam boiler |
| 5 | Mixer | 21 | Pump |
| 6 | Holding Bin | 22 | Cooler (Jacketed) |
| 7 | Metering screw Conveyor | 23 | Metering Pump |
| 8 | Bulk Molasses Storage | 24 | Storage Tank (Heated) |
| 9 | Stirrer | 25 | Stirrer |
| 10 | Filter | 26 | Metering Pump |
| 11 | Metering Pump | 27 | Drain Tap |
| 12 | Storage Tank | 28 | Wet Mixer |
| 13 | Metering Pump | 29 | Filling Machine |
| 14 | Heat Exchanger | 30 | Containers |
| 15 | Homogeniser | 31 | Conveyor |
| 16 | Feeder Tank (Heated) | 32 | Storage Tank (Heated) |
| 17 | Stirrer | 33 | Metering Pump |
| 18 | Metering Pump | 34 | Chiller |
| 19 | Thin Film Processor | 35 | Low Vacuum Extractor |
| 19A | Heated Wall | 36 | Condenser |
| 19B | Rotor | 37 | Storage Tank |
| 19C | Rotor Blade | 38 | Drain Tap |

In summary, a stored liquid, which can comprise a blend of carbohydrate and fats and other liquid dispersible nutrients, is preheated using a heat exchanger 14 and then passed through a homogeniser 15 into a thin film processor 19 which elevates the temperature to a level that reduces the moisture content and induces chemical changes, principally Maillard reactions. The treated liquid passes through a cooler 22 and is then blended with other dry raw materials and fats and oils before being dispensed into containers. The viscous product cools further in the containers and sets to a hard vitreous block at ambient temperatures.

Dry materials, comprising carbohydrates, fats, proteins and macro minerals, such as calcium, magnesium and phosphorus, are fed from storage silos 1 by way of screw conveyors 2 into a weigh hopper 4 where they are weighed using an electronic weigher into a mixer 5 which can be a ribbon band or another different type of dry mixer, e.g. a paddle mixer, in common use in the animal feed industry. A hopper fitted with a screw feeder 3 transfers pre-weighed small inclusion nutrients which can be vitamins, minerals, enzymes, growth promoters, or other additives, into hopper 4 and then into mixer 5. After mixing, the pre-mix is discharged into a holding bin 6. From the holding bin the blended dry materials are metered using a screw conveyor 7 at a known rate into wet mixer 28. The purpose of the holding bin 6 is to facilitate continuous availability of blended dry materials for the wet mixer 28, so that the whole manufacturing process is truly continuous and not dependent on 'batch mixing' as in other known processes.

The storage vessels 8 hold liquid raw materials which can comprise sugar cane molasses, sugar beet molasses, condensed molasses solubles, glycerol, whey permeate, fats and oils, and other materials. A stirrer 9 may be included in the storage tanks to ensure non-separation of the raw materials. The stored liquids are passed through a filter 10, and a metering pump 11 through heat exchangers 14 which elevate the temperature of the liquids to 50-70°C. The liquids are then passed through a homogeniser 15 into a feeder tank 16 fitted with a stirrer 17. The feeder tank 16 is fitted with a heating jacket heated by steam from a steam boiler 20 to maintain the temperature of the molasses mixture. The homogeniser 15 'conditions' the liquid by ensuring a consistent mixture with raw materials such as fat having a vastly increased surface area and increases the efficiency of the operation of the thin film processor 19. Additional raw materials such as oil, glycerol, surfactants can be metered at a known rate from storage vessels 12 via metering pumps 13 into the liquids from tanks 8 prior to the heat exchangers 14 and then through the homogeniser 15. The homogenised material is then drawn by a feeder pump 18 from the feeder tank 16 into the thin film processor 19.

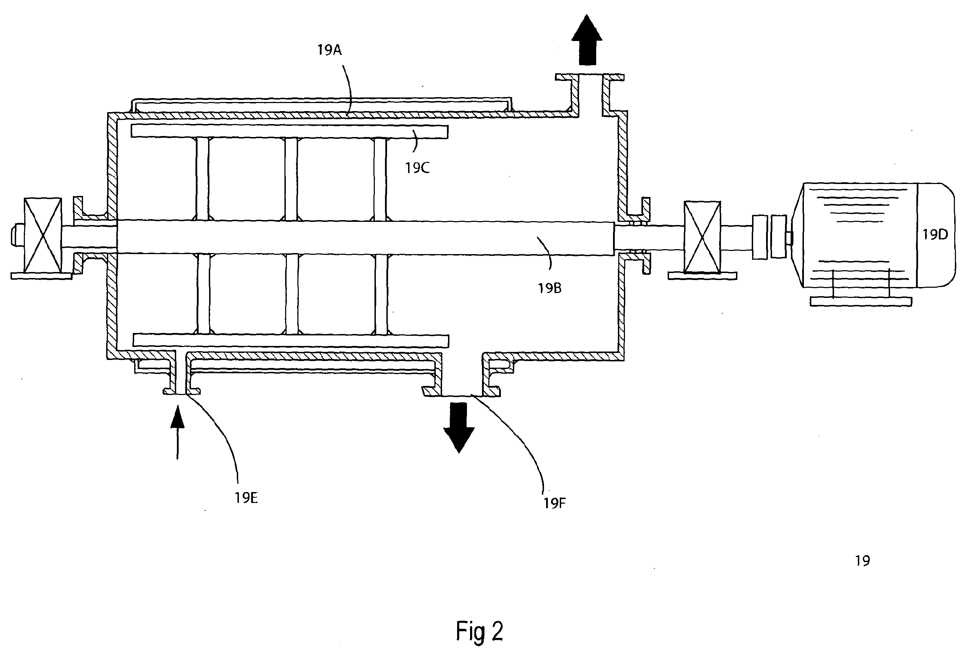

The thin film processor (TFP) 19 is shown in more detail in Figure 2. The TFP 19 is a rotary TFP (Rototherm (RTM), Artisan Industries) comprising a drum having an internal heated wall 19A and a rotor which creates a centrifugal force that keeps the liquid pressed against the heated wall 19A. The rotor is driven by a drive motor 19D. A turbulent thin-film is formed between the blade 19C of the rotor 19B and the process wall 19A and covers the entire heated section at all times, regardless of feed or processing rates. This film is constantly renewed as progressively more concentrated material is displaced towards the bottoms discharge nozzle by the incoming feed and extracted by a pump 21. The process wall is heated by a steam jacket with steam from a steam boiler 20. The carbohydrate-containing liquid continuously passes into the TFP through the input 19E, is processed to form the concentrated liquid and is removed from the output 19F.

The temperatures at which the chemical reactions (such as cracking) occur are typically 133 -140°C, but this can be modified by the presence of variable levels of oil, the addition of surfactants, and the degree of homogenisation. For example, it has been found that homogenisation can reduce the temperature at which reactions take place by 3 to 7°C. The addition of surfactants increases the dispersion of oil or fat globules through the mix and surface area and slightly lowers the temperature required for the reactions to occur. It has been found that the addition of at least 3% oil and 1 % glycerol, can facilitate the transition of the processed material through the thin film processor 19.

The hot concentrated mixture is extracted from the thin film processor 19 to the cooler 22 by a pump 21. The vapours formed by evaporation are collected by means of a low vacuum extractor 35 through a condenser 36 which is chilled using a chiller 34 and which are then collected into a liquid storage tank 37. Liquid from the liquid storage tank 37 is drained for disposal via drain tap 38.

The operation of the thin film processor 19 reduces the moisture level in the liquid to from 1 to 8%, preferably 3%, and it is discharged as a hot viscous liquid via the pump 21 into the cooler 22. Twin contra-rotating paddles propel the hot liquid through the cooler through which a stream of cold air is injected. The cooler 22 is jacketed and cooling water from a chiller 34 can be circulated to surround the cooler 22, to control the temperature of the emerging viscous liquid. The emerging viscous liquid has a temperature of 60 to 90°C.

The viscous liquid emerging from the cooler 22 can be pumped to a heated tank 24 fitted with a stirrer 25 and a heated jacket heated by steam from boiler 20 for temporary storage if necessary before entering the blending process. The holding tank 24 is fitted with an exit tap 27 so that the tank can be drained - for example when the TFP and /or cooler is cleaned and flushed though with water. The storage tank 24 can maintain the liquid at a temperature of 60 to 90°C and therefore a level of viscosity which allows it to be pumped 26 at a known rate into the mixer 28. The cooled, viscous liquid is then blended on a continuous basis with dry materials from discharge screw conveyor 7, as described above, so that a consistent product of known composition is discharged from the mixer by a metering mechanism which can be e.g. a screw or piston filling machine 29 or similar mechanism which dispenses accurately known volumes and weights of material. Should it be required, additional liquids, which can be liquid fats and oils such as soya oil, corn oil, and palm oil can be metered at known rates from storage tanks 32 via metering pumps 33 into the mixer 28 for blending with the dry materials from screw conveyor 7 and the cooled viscous liquid from storage tank 24, without prior processing.

Alternatively, and preferably, the cooled viscous liquid is metered from the cooler 22 at a known rate via an extraction pump 23 into the mixer 28 where it is blended with dry materials from the screw conveyor 7 and the additional liquids from storage tanks 32 as described above. The blended mix is discharged, as above, from the mixer 28 by way of a metering mechanism which can be e.g. a screw or a piston filling machine into containers 30 and transferred by conveyor 31 to pallet loading station. Containers can be any weight up to 500kg but are generally provided in sizes of 5kg to 150kg.

A wide variety of raw materials and operating conditions have been tested

### 1. Temperature of molasses mixture

The temperature of the molasses mixture prior to treatment in the TFP has been found to influence the speed and efficiency of the process. Input temperatures of from 40 - 80°C have been tested. In general, the higher the temperature of the inflowing liquid the more efficient is the operation of the TFP. Whilst inflow temperature has no effect on the optimum temperature at which the chemical reactions that are necessary to induce changes in the sugar chemistry of the mixture take place, i.e. the contact between the mixture and the internal wall of the TFP, there is a reduction in the power required for heating the internal wall of the TFP and this makes the operation more energetically efficient. The rate of passage of the mixture is increased in proportion to the elevation in temperature of the inflowing mixture. However, there is also a critical dwell time within the TFP for the ideal sugar reaction or 'cracking' to take place and this varies according to the nature of the mixture. Cane molasses alone and sugar beet molasses alone have an optimum inflow temperature of between 40-70°C. Mixtures incorporating high levels of fat, say 10-25% fat, have been processed satisfactorily at inflow (input) temperatures of 60-80°C and inflow feed rates may be increased, disproportionately, by 10-50%. It is important to avoid the possibility, however remote, of an uncontrollable exothermic reaction and it is therefore prudent to limit the temperature of the molasses mixture prior to the TFP to 70°C.

### 2. Additives

The addition of oils such as soya oil, corn oil palm oil or palm fatty acid distillate (PFAD) may increase the optimum temperature of the mixture entering the TFP, dependent on the level of inclusion, to 50-80°C. This higher temperature reduces the energy cost of dehydration in the TFP as already outlined above. However, the cost of addition of oils is an important economic factor which has to be balanced against the savings in energy cost of dehydration in the TFP; this calculation can only be done at the time of manufacture because it depends on local costs of energy and additives, but generally, for the production of feedblocks in which energy content is not of first importance, lower levels of oil 3-5% are indicated as being usually more cost effective. Another additive, less expensive, shown to have a beneficial effect on the process is glycerol and a low level 0.5 -1.5% incorporated in the molasses mixture facilitates the rate of passage through the TFP and hence the rate of manufacture of blocks, with little detriment to hardness or consumption characteristics by sheep or cattle.

It has also been found that satisfactory hardness of feedblocks can be obtained with the addition of fats up to 25%, provided that the fats have a higher melting point typical, for example, of palm oil. The incorporation of fat can be adjusted to manipulate the energy content of the LMB to the level required for different animals, performance levels or environmental conditions. It has been found that these fats can be melted and mixed with the molasses mixture prior to the TFP and their inclusion can increase the rate at which the material passes through the TFP by up to 50% whilst still achieving the necessary dwell time required for chemical reaction i.e. cracking of the sugars to take place. A proportion of the increased throughput can be ascribed to the dilution effect of the additional fat which is not processed but the inclusion of fat and prior homogenisation have an additional throughput benefit. The inclusion of fat prior to processing may therefore be justified for efficiency of operation of the TFP. However it has been found that fats and oils can be added after processing into the mixer without loss in hardness.

Other additives which have been tested include urea, which at low levels 0-1% facilitates, through its 'thinning' action, the passage of pure molasses through the TFP and allow an improvement in production of processed molasses which otherwise would be difficult.

Other combinations of raw materials also influence the rate of passage through the TFP. For example, combinations of cane molasses and beet molasses ranging from 0-100% exert a linear effect on rate of passage at which 'cracking' of the sugars can be achieved which improves the energy efficiency of the process and production output, whilst still not compromising product quality. The higher the inclusion of beet molasses, the higher is the rate of processing. Condensed molasses solubles (CMS) additions to the molasses also increase the rate of volume of material processed, largely due to the higher level of moisture in CMS which can be abstracted efficiently at the same time as achieving 'cracking' of the sugars; satisfactory blocks have been manufactured with 30 - 40% inclusion of CMS. A similar result has been obtained with other molasses extenders, including pot ale syrup and whey permeates.

The use of surfactants was also tested at low levels to improve the dispersion of fats and oils in the molasses mixtures. Surfactants at low levels of inclusion between 0.25 and 0.5% were found to facilitate the passage of the mixture through the TFP, improving rate of processing by 5-10%. However, homogenisation was subsequently found to be effective when low levels (3-5%) of oil are added and that the combination of surfactant and homogeniser did not lead to improved performance to justify the additional cost of the surfactant. A surfactant can be effective when a homogeniser is not available and the level of inclusion will depend on the characteristics of commercially available surfactants and the combination of ingredients in the molasses mixture. The addition of a surfactant, together with homogenisation of molasses alone facilitates the processing of molasses at a production rate which is otherwise not achievable.

### 3. Raw Materials

Molasses, either cane of different origins (such as, but not exclusively, Pakistan, Indian, Floridian, Honduras, Australian) or beet are difficult to process through the TFP on their own and throughput can be facilitated by the addition of surfactants and by homogenisation as referred to above. Prior processing by homogenisation and addition of surfactant has been shown to have an effect on the temperature at which desired changes in the sugar chemistry take place which enable the production of the hard vitreous block. Untreated molasses of any origin passes through the TFP at a very slow and unpredictable rate, depending on origin; for example Australian usually (but not always) contains more gums and is slow to process, whereas Pakistan molasses is usually (but not always) thinner and processes more quickly. The addition of 3% oil facilitates throughput at a reaction temperature of around 135°C as previously noted. Without the addition of oil, prior homogenisation, the addition of surfactant enables an improvement in throughput of straight molasses of any origin; hard, vitreous blocks have been produced when the processed mixture is then blended with other raw materials as previously described. This reduction in processing temperature has clearly equally produced reductions in energy costs of dehydration and cooling of the mixture post dehydration. Current practice as defined by previous patents, involve cooking a mass of molasses or molasses mixtures with or without vacuum for substantial lengths of time - eg EP1 726 214 B1, EP1 927 291 A1, EP 1 547 470, US 3961081, US 4846053, US 5482729 at higher temperatures which range up to 180°C. The process offers the opportunity for substantial reduction in energy and carbon emissions. Since molasses, either cane or beet, is derived from different areas of the world and from various manufacturing processes, differences exist in their content of sugars, gums and other constituents. The process offers flexibility in manufacturing procedure to optimise the balance of throughput and energy cost by manipulating the addition of oils and fats, surfactants and other beneficial raw materials such as, but not exclusively, glycerol and urea added to the molasses prior to the TFP.

Condensed molasses solubles (CMS) alone can be processed but the higher water content of the CMS has consequence of a reduction in rate of production of dehydrated material. Because of its low dry matter and lower sugar content of the dry matter, CMS may best be used as an economical molasses 'extender' and up to 40% of CMS has been satisfactory as above. Other raw materials which can be processed on their own but are best used as 'extenders' would include whey permeates. Frequently, high dry matter whey permeates are saturated with crystals of lactose which can separate out and cause blockages. A method of avoiding this problem is to suspend the crystals using gums prior to mixing with the molasses. It should be noted that materials added prior to processing are mainly but not exclusively, liquids which add benefit to the process by being homogenised and/or dehydrated with the molasses mixture. Other conventional animal feed materials such as cereals, proteins and mineral and vitamin additives are already at low moisture levels 0-14% and therefore their addition prior to hydration is neither warranted nor desirable since the high temperatures in the TFP could have a deleterious effect on their nutritional value; this is especially true of heat-sensitive vitamins or animal health medicines and additives which are best added post dehydration. There is little commercial sense in passing products through the TFP which do not improve the process of dehydration and cooking; raw materials which define the specification and purpose of the blended feed block are best added in the blender after processing.

### 4. Homogeniser

In one embodiment, the invention incorporates a homogeniser which is positioned to homogenise the mixtures prior to the TFP. It has been found that the action of homogenisation on all combinations of mixtures improves the efficiency with which the material is processed and rate of passage through the TFP. The action of homogenisation is to thoroughly break down and intensively blend all the substances within the mixture to form a uniform suspension or emulsion in which the surface area of the discrete components of the mixture is substantially increased and more reactive to the action of the heat from the internal wall of the TFP. By homogenisation of molasses mixtures it is possible to reduce the temperature at which the 'cracking' occurs in the TFP by between 3 -7°C, effecting a saving in energy cost of manufacture and increasing the safe use of the machine. Whilst this is a favourable characteristic it is not essential to the process and other suitable liquid blending equipment could be used and be equally as effective.

### Detailed example

Molasses is not a homogeneous raw material since each origin molasses may also be the product of different factories with slightly different manufacturing procedures which can,for example, lead to variation in the content of residual gums. The flexibility of the present invention affords the facility to manipulate the addition of oil and surfactants, homogenisation, temperatures of the TFP and dwell time, to satisfactorily accommodate these differences in raw material composition to produce a viscous liquid which will set to a hard vitreous low moisture feed block. It follows that the example given in detail below is typical, but not exclusively definitive for all types of molasses or carbohydrate containing liquids which are processed.

A blend of Pakistan sugar cane molasses (86.5%) and palm oil (13.5%) was prepared using an in-line homogeniser 15 and stored at an operating temperature of 67°C within a heated tank 16 which was used to supply the TFP 19.

The blend was passed through the TFP at a temperature of 136°C_at 5 tonnes per hour.and the input moisture content of the molasses/palm oil blend was recorded at 17.8%. The moisture content of the blend after processing through the TFP was recorded at 3.28% based on an average of 6 samples taken throughout the processing run.

On removal from the TFP the molasses/palm oil blend was intimately blended with a selection of dry feed ingredients in order to provide a finished product suitable in terms of both nutritional and physical terms for feeding to animals. The following formulation was prepared for use:
Molasses/Palm Oil blend 83.2%,
Soyabean meal 7%,
Urea 1.75%,
Di-calcium phosphate 4.5%,
Calcium carbonate 3.3%,
Trace mineral and vitamins 0.25%

The formulation was placed in plastic buckets and allowed to cool in an ambient temperature of 21 °C to a vitreous hard consistency, characteristic of a low moisture block.

Intake of the low moisture block was determined using twin bearing mule ewes within a liveweight range of 80-90kg. Two groups of ewes, comprising 22 ewes per group (all 6 weeks from lambing) were housed in straw bedded pens. One group had access to low moisture blocks of the invention (LMBs) and the second group had access to a market established low moisture block (MELMB) of similar nutrient specification. Both groups were fed the following:
Haylage (offered for 3 hours in morning and 2 hours in the evening
Straw-ad libitum
18% crude protein compound feed - 450g per day
ground maize meal -100g per day

Block intake was determined by weighing the buckets before and after access and dividing the amount consumed over the number of days and by the number of animals to provide an average daily consumption figure.

The consumption of both products, LMBs and MELMBS was monitored over a period of 20 days.

### Results

The intake of the LMB of the invention was reported at 94.9g / ewe/day and the intake of the MELMB was reported at 102.2g/ewe/day, which in conditions of 'free access' where variation in intake is normal, is a perfectly acceptable commercial result.

### Conclusion

The results of this study reveal that the manufacture of a low moisture block using the thin film processor method under controlled conditions can produce a feed supplement of satisfactory properties in terms of physical form and intake characteristics.

The result is typical of comparative trials of this kind carried out with LMBS and MELMBs involving beef animals, dairy heifers and young growing stock as well as sheep, which were undertaken on a number of farms in upland and lowland situations, with stock either housed or in fields. LMBs gave results which were comparable with MELMBs in all commercial situations.

### Temperature study

A blend of Pakistan molasses and palm oil, prepared as in example 1, was passed through the TFP under light vacuum, mixed with the additives already detailed above and then stored in plastic bucket containers for 24-48 hours before inspection. Samples were taken at different operating temperatures and the resulting products were characterised as hard (satisfactory vitreous product), soft (unsatisfactory) or resistance (intermediate). The results are shown below.

| **Sample** | **TFP Temperature** | **TFP Temperature** | **Final Mixture temperature in buckets** | **Final Mix moisture level in buckets** | **Physical Properties of cooled block** |
|---|---|---|---|---|---|
| **Reference** | **°F** | **°C** | **°C** | **%** | |
| | | | | | |
| S1 | 270 | 132.2 | 83.4 | 4.2 | Resistance |
| S2 | 263 | 128.3 | 81.7 | 4.9 | Soft |
| S3 | 266 | 130 | 80.5 | 5.7 | Soft |
| S4 | 280 | 137.8 | 78.7 | 4.2 | Hard |
| S5 | 283 | 139.4 | 82.4 | 3.7 | Hard |

It can be seen that for this particular case, a TFP temperature of greater than 132°C (270°F) was required to obtain a satisfactory vitreous product.

## Claims

1. A method for the manufacture of an animal feed supplement, which is a vitreous solid, comprising processing a carbohydrate-containing liquid composition to induce cracking and evaporation and thereby form a concentrated liquid composition; and solidifying the concentrated liquid composition to form the animal feed supplement; wherein the carbohydrate-containing liquid composition is processed by continuously feeding the carbohydrate-containing liquid composition into a first (input) end of a thin film processor, subjecting the carbohydrate-containing liquid composition to cracking and evaporation within the thin film processor and continuously removing the concentrated liquid composition from the second (output) end of the thin film processor, wherein the concentrated liquid composition has a moisture content of from 2 to 8%.

2. The method of claim 1, wherein the thin film processor is a thin film rotary processor.

3. The method of claim 1 or claim 2, wherein the concentrated liquid composition has a moisture content of from 3 to 5%.

4. The method of any one of the preceding claims, wherein the carbohydrate-containing liquid composition is fed into the first end of the thin film processor at a temperature of from 40 to 80°C.

5. The method of any one of the preceding claims, wherein the concentrated liquid composition is solidified in a container to form a low moisture block.

6. The method of any one of the preceding claims, wherein the carbohydrate-containing liquid composition is homogenised before transfer to the thin film processor.

7. The method of any one of the preceding claims, wherein the pressure in the thin film processor is substantially atmospheric pressure.

8. The method of any one of the preceding claims, wherein the concentrated liquid composition is transferred to a cooler or transferred to a mixer on removal from the thin film processor.

9. The method of any one of the preceding claims, wherein at least one additive is mixed with the concentrated liquid composition after it has been removed from the thin film processor and before it is solidified to form the animal feed supplement.

10. The method of any one of the preceding claims, wherein the carbohydrate-containing liquid composition comprises molasses.

11. The method of any one of the preceding claims, wherein the carbohydrate-containing liquid composition additionally comprises fat.

12. The method of any one of the preceding claims, wherein the carbohydrate-containing liquid composition is heated to a temperature of at least 125°C within the thin film processor.

13. The method of any one of the preceding claims, wherein the carbohydrate-containing liquid composition additionally comprises (i) from 0.2 to 1.5% glycerol, (ii) from 0.1 to 2% urea and/or (iii) from 0.01 to 1% surfactant.

## Patentansprüche

1. Verfahren zur Herstellung eines Tierfutterergänzungsmittels, dass ein glasartiger Feststoff ist, umfassend das Verarbeiten einer Kohlehydrat enthaltenden flüssigen Zusammensetzung, um Aufspalten und Verdampfen zu induzieren und dadurch eine konzentrierte flüssige Zusammensetzung zu bilden; und das Verfestigen der konzentrierten flüssigen Zusammensetzung, um das Tierfutterergänzungsmittel zu bilden; wobei die Kohlehydrat enthaltende flüssige Zusammensetzung durch kontinuierliches Einführen der Kohlehydrat enthaltenden flüssigen Zusammensetzung in ein erstes (Eingabe-) Ende eines Dünnschichtprozessors, Unterwerfen der Kohlehydrat enthaltenden flüssigen Zusammensetzung dem Aufspalten und Verdampfen innerhalb des Dünnschichtprozessors und kontinuierliches Entfernen der konzentrierten flüssigen Zusammensetzung von dem zweiten (Ausgabe-) Ende des Dünnschichtprozessors verarbeitet wird, wobei die konzentrierte flüssige Zusammensetzung einen Feuchtigkeitsgehalt von 2 bis etwa 8 % aufweist.

2. Verfahren nach Anspruch 1, wobei der Dünnschichtprozessor ein Dünnschichtrotationsprozessor ist.

3. Verfahren nach Anspruch 1 oder Anspruch 2, wobei die konzentrierte flüssige Zusammensetzung einen Feuchtigkeitsgehalt von 3 bis 5 % aufweist.

4. Verfahren nach einem der vorhergehenden Ansprüche, wobei die Kohlehydrat enthaltende flüssige Zusammensetzung in das erste Ende des Dünnschichtprozessors bei einer Temperatur von 40 bis 80 °C eingeführt wird.

5. Verfahren nach einem der vorhergehenden Ansprüche, wobei die konzentrierte flüssige Zusammensetzung in einem Behälter verfestigt wird, um einen Block geringer Feuchtigkeit zu bilden

6. Verfahren nach einem der vorhergehenden Ansprüche, wobei die Kohlehydrat enthaltende flüssige Zusammensetzung vor dem Übertragen in den Dünnschichtprozessor homogenisiert wird.

7. Verfahren nach einem der vorhergehenden Ansprüche, wobei der Druck in dem Dünnschichtprozessor im Wesentlichen Luftdruck ist.

8. Verfahren nach einem der vorhergehenden Ansprüche, wobei die konzentrierte flüssige Zusammensetzung nach Entfernen aus dem Dünnschichtprozessor in eine Kühlvorrichtung übertragen wird oder in eine Mischvorrichtung übertragen wird.

9. Verfahren nach einem der vorhergehenden Ansprüche, wobei mindestens ein Zusatzmittel mit der konzentrierten flüssigen Zusammensetzung gemischt wird, nachdem sie aus dem Dünnschichtprozessor entfernt worden ist und bevor sie verfestigt worden ist, um das Tierfutterergänzungsmittel zu bilden.

10. Verfahren nach einem der vorhergehenden Ansprüche, wobei die Kohlehydrat enthaltende flüssige Zusammensetzung Melasse umfasst.

11. Verfahren nach einem der vorhergehenden Ansprüche, wobei die Kohlehydrat enthaltende flüssige Zusammensetzung zusätzlich Fett umfasst.

12. Verfahren nach einem der vorhergehenden Ansprüche, wobei die Kohlehydrat enthaltende flüssige Zusammensetzung innerhalb des Dünnschichtprozessors auf eine Temperatur von mindestens 125 °C erhitzt wird.

13. Verfahren nach einem der vorhergehenden Ansprüche, wobei die Kohlehydrat enthaltende flüssige Zusammensetzung zusätzlich (i) 0,2 bis 1,5 % Glycerin, (ii) 0,1 bis 2 % Harnstoff und/oder (iii) 0,01 bis 1 % Tensid umfasst.

## Revendications

1. Procédé de fabrication d'un complément alimentaire pour animaux, qui est un solide vitreux, comprenant la transformation d'une composition liquide contenant un hydrate de carbone pour induire le craquage et l'évaporation et de là former une composition liquide concentrée; et la solidification de la composition liquide concentrée pour former le complément alimentaire pour animaux; où la composition liquide contenant un hydrate de carbone est transformée en alimentant continuellement la composition liquide contenant un hydrate de carbone dans une première extrémité (entrée) d'un dispositif de transformation en film fin, en soumettant la composition liquide contenant un hydrate de carbone au craquage et à l'évaporation à l'intérieur du dispositif de transformation en film fin et en éliminant continuellement la composition liquide concentrée de la seconde extrémité (sortie) du dispositif de transformation en film fin, où la composition liquide concentrée présente une teneur en humidité de 2 à 8 %.

2. Procédé selon la revendication 1, où le dispositif de transformation en film fin est un dispositif de transformation rotatif en film fin.

3. Procédé selon la revendication 1 ou la revendication 2, où la composition liquide concentrée présente une teneur en humidité de 3 à 5 %.

4. Procédé selon l'une quelconque des revendications précédentes, où la composition liquide contenant un hydrate de carbone est alimentée dans la première extrémité du dispositif de transformation en film fin à une température de 40 à 80°C.

5. Procédé selon l'une quelconque des revendications précédentes, où la composition liquide concentrée est solidifiée dans un récipient pour former un bloc à faible teneur d'humidité.

6. Procédé selon l'une quelconque des revendications précédentes, où la composition liquide contenant un hydrate de carbone est homogénéisée avant le transfert vers le dispositif de transformation en film fin.

7. Procédé selon l'une quelconque des revendications précédentes, où la pression dans le dispositif de transformation en film fin est substantiellement la pression atmosphérique.

8. Procédé selon l'une quelconque des revendications précédentes, où la composition liquide concentrée est transférée vers un dispositif de refroidissement ou transférée vers un mélangeur à l'issue du retrait du dispositif de transformation en film fin.

9. Procédé selon l'une quelconque des revendications précédentes, où au moins un additif est mélangé avec la composition liquide concentrée après qu'elle a été retirée du dispositif de transformation en film fin et avant qu'elle soit solidifiée pour former le complément alimentaire pour animaux.

10. Procédé selon l'une quelconque des revendications précédentes, où la composition liquide contenant un hydrate de carbone comprend des molasses.

11. Procédé selon l'une quelconque des revendications précédentes, où la composition liquide contenant un hydrate de carbone comprend additionnellement de la matière grasse.

12. Procédé selon l'une quelconque des revendications précédentes, où la composition liquide contenant un hydrate de carbone est chauffée à une température d'au moins 125°C à l'intérieur du dispositif de transformation en film fin.

13. Procédé selon l'une quelconque des revendications précédentes, où la composition liquide contenant un hydrate de carbone comprend additionnellement (i) de 0,2 à 1,5 % de glycérol, (ii) de 0,1 à 2 % d'urée et/ou (iii) de 0,01 à 1 % de tensioactif.
